# EUROPEAN PATENT SPECIFICATION

(11) **EP 3 477 456 B1**
(45) Date of publication and mention of the grant of the patent: **15.09.2021**
(21) Application number: 17831214.6
(22) Date of filing: 15.06.2017
(51) Int. Cl.: G06F 3/0488, G06F 3/0481, G06F 3/0482, H04M 1/725

(54) **NOTIFICATION INFORMATION DISPLAY METHOD AND DEVICE**
VERFAHREN UND VORRICHTUNG ZUR BENACHRICHTIGUNGSINFORMATIONSANZEIGE
PROCÉDÉ ET DISPOSITIF D'AFFICHAGE D'INFORMATIONS DE NOTIFICATION

(30) Priority: 20.07.2016 KR 20160092074
(43) Date of publication of application: 01.05.2019
(73) Proprietor: Samsung Electronics Co., Ltd., Suwon-si, Gyeonggi-do 16677 (KR)
(72) Inventor: LEE, Chaekyung, Seoul 07209 (KR); AN, Sungyoun, Seongnam-si Gyeonggi-do 13568 (KR); KIM, Bo-Keun, Suwon-si Gyeonggi-do 16699 (KR)
(74) Representative: HGF
(86) International application number: PCT/KR2017/006250
(87) International publication number: WO 2018/016741

(56) References cited:
- EP-A1- 2 806 621
- EP-A2- 2 141 574
- KR-A- 20100 009 020
- KR-A- 20140 064 078
- KR-A- 20140 137 509
- KR-B1- 101 531 209
- US-A1- 2014 165 006
- US-A1- 2014 189 597
- US-A1- 2015 031 417

## Description

### Technical Field

The present disclosure relates to a method and an apparatus for displaying notification information if notification occurs in an electronic device.

### Background Art

As functions of an electronic device are diversified, a multimedia device having complex functions such as photo or video shooting, music or video file playback, game, broadcasting reception is implemented. Icons relating to various applications may be outputted on a display of such a mobile terminal, and the application may be executed by touching the outputted icon. Meanwhile, if the application is running as background or certain information is received, presence of the information is notified to a user by displaying an indicator such as a badge near a corresponding icon. For example, for a missed call, a number notifying the missed call is displayed near a phone icon. As another example, for an unread message, the number of unread messages is displayed near a message icon. If the badge is displayed near the icon, to obtain the notification information, the user may obtain content of the notification information by touching the icon and executing a related application, or obtain content of the notification information through a quick panel.

EP 2 806 621A1 relates to a notification function, and describes a function of differently displaying pieces of notification information by applying a plurality of display types.

US 2014/189597 A1 describes a method for presenting an icon that includes: displaying an icon for executing a function; displaying a notification associated with the icon; changing, by a processor, an attribute of the function from a first value to a second value based on an input received via the notification; and modifying the notification to indicate the second value of the attribute wherein the notification is displayed and modified while the function is not executed by the processor.

US 2014/165006 A1 describes a device which displays a plurality of selectable user interface objects that includes one or more fold icons on a display. The device detects a first input requesting to select a folder icon for a folder that includes selectable icons divided between a plurality of distinct. separately displayed pages of a folder view. While displaying the first page of the folder view, the device detects a second input that corresponds to a request to display a second page of the folder view. In response to detecting the second input, the device ceases to display the first page and displays the second page of the folder view.

EP 2141574 A2 discloses a mobile terminal and a method of controlling the mobile terminal are provided. The method includes displaying (S200) a first screen on a display module; if a pressure-touch input is detected (S202) from the first screen, displaying (S204) one or more menu items associated with the first screen; choosing (S206) one of the menu items according to a level of pressure corresponding to the pressure-touch input; and if a predetermined amount of time elapses after the choosing of one of the menu items, performing (S208) an operation corresponding to the chosen menu item. Therefore, it is possible to control various operations performed by the mobile terminal in response to a pressure-touch input.

### Disclosure of Invention

### Technical Problem

If a user executes a related application to obtain notification information, a currently executing screen needs to switch to an application screen and accordingly the task is degraded in continuity and complicated, to cause inconvenience.

If the user inputs a force touch on an icon badge portion displayed on a display of an electronic device, at least part of content of notification information is displayed around the icon, and thus the user may obtain at least part of the content of the notification information without switching the current screen to other application screen.

### Solution to Problem

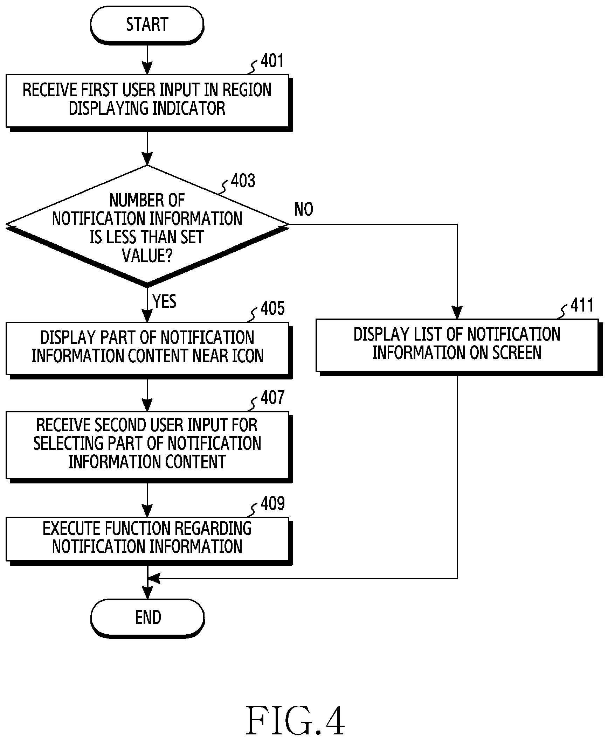

The invention is defined by the independent claims. Further aspects of the invention are outlined in the dependent claims. When the term "embodiment" is used for describing an unclaimed combination of features, it has to be understood as referring to examples useful for understanding the present invention. In particular, paragraphs [0046] to [0069] of the description and figures 4 to 9 do not describe part of the claimed invention.

### Advantageous Effects of Invention

According to an exemplary embodiment of the present disclosure, a user of an electronic device may obtain notification information easily and quickly.

### Brief Description of Drawings

FIG. 1 is a block diagram of a network environment of an electronic device according to an exemplary embodiment of the present disclosure.
FIG. 2 is a block diagram of an electronic device according to an exemplary embodiment of the present disclosure.
FIG. 3 is a block diagram of a program module according to various embodiments.
FIG. 4 is a flowchart of a process for displaying notification information content near an icon according to a first user input while a badge is displayed in an electronic device.
FIGS. 5 through 9 illustrate a state where icons and notification information indicators are displayed on a screen and an example where notification information content is displayed on the screen according to a user input in an electronic device according to an exemplary embodiment of the present disclosure.
FIG. 10 is a flowchart of a process for displaying an icon and a badge of an application having notification near an icon according to a first user input while a badge is displayed at a folder icon in an electronic device according to an exemplary embodiment of the present disclosure.
FIG. 11 illustrates a state where icons and notification information badges are displayed on a screen and an example where an icon and a badge of an app having notification are displayed near the icon according to a first user input in an electronic device according to an exemplary embodiment of the present disclosure.
FIG. 12 is a flowchart of a process for displaying first information, second information, or third information according to a first user input while icons and indicators are displayed on a screen in an electronic device.
FIG. 13 is a flowchart of a process for displaying information regarding notification information near an icon on a screen according to a first user input while an icon and an indicator are displayed on the screen in an electronic device.

### Best Mode for Carrying out the Invention

Various embodiments of the present disclosure are described in greater detail with reference to the accompanying drawings. It should be understood that various embodiments of the present disclosure and the terms used herein are not intended to limit the technological features set forth herein. The same or similar components may be designated by the same or similar reference numerals although they are illustrated in different drawings. It is to be understood that the singular forms "a," "an," and "the" also include plural referents unless the context clearly dictates otherwise. In the present disclosure, an expression such as "A or B," "at least one of A and B" or "one or more of A and B" may include all possible combinations of the listed items. Expressions such as "first," "second," "primarily," or "secondary," as used herein, may represent various elements regardless of order and/or importance, and do not limit the corresponding elements. The expressions may be used for distinguishing one element from another element. When it is described that an element (such as a first element) is operatively or communicatively "coupled to" or "connected to" another element (such as a second element), the element may be directly connected to the other element or may be connected through another element (such as a third element).

The expression "configured (or set) to", as used in the present disclosure, may be used interchangeably with, for example, "suitable for," "having the capacity to," "designed to," "adapted to," "made to," or "capable of', according to the situation. The term "configured (or set) to" does not only refer to "specifically designed to" in hardware. Alternatively, in some situations, the expression "apparatus configured to" may refer to a situation in which the apparatus "may" operate together with another apparatus or component. The phrase "a processor configured (or set) to perform A, B, and C" may be a dedicated processor, a general-purpose processor (such as a central processing (CPU) or an application processor (AP)) that may perform a corresponding operation by executing at least one software program stored in a dedicated processor (such as an embedded processor) for performing a corresponding operation or in a memory device.

An electronic device, according to an embodiment of the present disclosure, may be for example, at least one of a smart phone, a tablet PC, a mobile phone, a video phone, an e-book reader, a desktop PC, a laptop PC, a notebook computer, a workstation, a server, a PDA, a portable multimedia player (PMP), an MPEG 3 (MP3) player, medical equipment, a camera, and a wearable device, and the like, but is not limited thereto. The wearable device may include at least one of an accessory type (e.g., a watch, a ring, a bracelet, an ankle bracelet, a necklace, eyeglasses, a contact lens, or a head-mounted-device (HMD)), a fabric or clothing embedded type (e.g., electronic garments), a body attachable type (e.g., a skin pad or a tattoo), and an implantable circuit, and the like, but is not limited thereto. The electronic device may be at least one of, for example, a television, a digital versatile disc (DVD) player, an audio device, a refrigerator, an air-conditioner, a cleaner, an oven, a microwave oven, a washing machine, an air cleaner, a set-top box, a home automation control panel, a security control panel, a media box, an electronic dictionary, an electronic key, a camcorder, and an electronic frame, and the like, but is not limited thereto.

In an embodiment of the present disclosure, the electronic device may be at least one of various medical devices (such as, various portable medical measuring devices (a blood sugar level measuring device, a heartbeat measuring device, a blood pressure measuring device, or a body temperature measuring device), a magnetic resonance angiography (MRA) device, a magnetic resonance imaging (MRI) device, a computed tomography (CT) device, a scanning machine, and an ultrasonic wave device), a navigation device, a global navigation satellite system (GNSS), an event data recorder (EDR), a flight data recorder (FDR), a vehicle infotainment device, electronic equipment for a ship (such as, a navigation device for a ship and a gyro compass), avionics, a security device, a head unit for a vehicle, an industrial or home robot, a drone, an automated teller machine (ATM), a point of sales (POS) device, and an Internet of things (IoT) device (e.g., a light bulb, various sensors, a sprinkler device, a fire alarm, a thermostat, a street light, a toaster, sports equipment, a hot water tank, a heater, and a boiler), and the like, but is not limited thereto. According to an embodiment of the present disclosure, the electronic device may be at least one of a portion of furniture, building/construction or vehicle, an electronic board, an electronic signature receiving device, a projector, and various measuring devices (e.g., water supply, electricity, gas, or electric wave measuring device), and the like, but is not limited thereto. An electronic device may be a flexible electronic device or a combination of two or more of the foregoing various devices. An electronic device is not limited to the foregoing devices, and may be embodied as a newly developed electronic device. The term "user", as used herein, may refer to a person using an electronic device or a device using an electronic device (e.g., an artificial intelligence electronic device).

The term "user", as used herein, may refer to a person operating an electronic device or a device performing a operation of an electronic device (e.g., an artificial intelligence electronic device or a robot).

In this disclosure, "user interface (UI) element" indicates a graphic object which is inputted from a user or is displayed on a screen to provide information to the user. Also, "UI element" may indicate an object which allows interaction with the user and visual, auditory, tactile, and olfactory feedbacks according to a user input.

In this disclosure, "application" or "app" indicates a series of computer program sets designed to conduct a specific task. The application may be various in this specification. For example, there may be, but not limited to, a game application, a video playing application, a map application, a memo application, a calendar application, a phone book application, a broadcasting application, an exercise support application, a payment application, a photo folder application, a medical device control application, a user interface providing application of a plurality of medical devices.

Hereafter, exemplary embodiments of the present disclosure are described in detail by referring to the attached drawings.

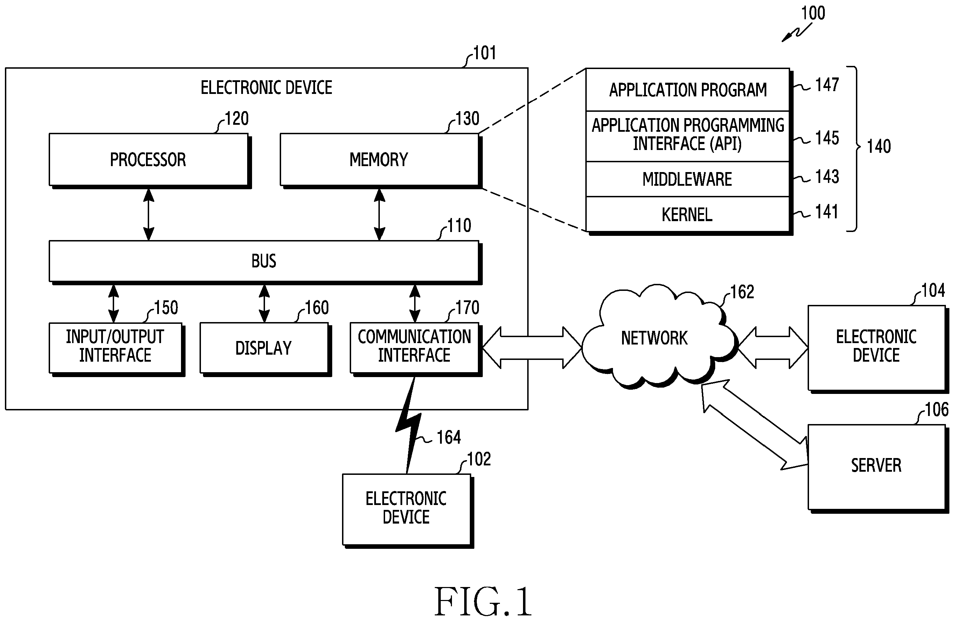

FIG. 1 is a block diagram of an electronic device in a system (100), according to an embodiment of the present disclosure. The electronic device 101 includes a bus 110, a processor 120, a memory 130, an input/output interface 150, a display 160, and a communication interface 170. The electronic device 101 may be provided without at least one of the components, or may include at least one additional component. The bus 110 may include a circuit for connecting the components 120 through 170 and delivering communication signals (e.g., control messages or data) therebetween. The processor 120 may include one or more of a CPU, an AP, and a communication processor (CP). The processor 120, for example, may perform an operation or data processing with respect to control and/or communication of at least another component of the electronic device 101.

The memory 130 may include a volatile and/or nonvolatile memory. The memory 130, for example, may store commands or data relating to at least another component of the electronic device 101. According to an embodiment of the present disclosure, the memory 130 may store software and/or a program 140. The program 140 includes, for example, a kernel 141, middleware 143, an application programming interface (API) 145, and/or an application program (or applications) 147. At least part of the kernel 141, the middleware 143, or the API 145 may be referred to as an operating system (OS). The kernel 141 may control or manage system resources (e.g., the bus 110, the processor 120, or the memory 130) used for performing operations or functions implemented by the other programs (e.g., the middleware 143, the API 145, or the applications 147). Additionally, the kernel 141 may provide an interface for controlling or managing system resources by accessing an individual component of the electronic device 101 from the middleware 143, the API 145, or the applications 147.

The middleware 143, for example, may serve an intermediary role for exchanging data between the API 145 or the applications 147 and the kernel 141 through communication. Additionally, the middleware 143 may process one or more job requests received from the applications 147, based on their priority. The middleware 143 may assign a priority for using a system resource (e.g., the bus 110, the processor 120, or the memory 130) of the electronic device 101 to at least one of the applications 147, and process the one or more job requests. The API 145, as an interface through which the applications 147 controls a function provided from the kernel 141 or the middleware 143, may include, for example, at least one interface or function (e.g., an instruction) for file control, window control, image processing, or character control. The input/output interface 150, for example, may deliver commands or data input from a user or another external device to other component(s) of the electronic device 101, or output commands or data input from the other component(s) of the electronic device 101 to the user or another external device.

The display 160, for example, may include a liquid crystal display (LCD), a light emitting diode (LED) display, an organic light emitting diode (OLED) display, a microelectromechanical systems (MEMS) display, or an electronic paper display, and the like, but is not limited thereto. The display 160, for example, may display various content (e.g., texts, images, videos, icons, and/or symbols) to the user. The display 160 may include a touch screen, for example, and receive touch, gesture, proximity, or hovering inputs by using an electronic pen or a user's body part. The communication interface 170, for example, may set communications between the electronic device 101 and an external device (e.g., a first external electronic device 102, a second external electronic device 104, or a server 106. The communication interface 170 may communicate with the second external electronic device 104 or the server 106 over a network 162 through wireless communication or wired communication.

The wireless communication, for example, may include cellular communication using at least one of long term evolution (LTE), LTE-advanced (LTE-A), code division multiple access (CDMA), wideband CDMA (WCDMA), universal mobile telecommunications system (UMTS), wireless broadband (WiBro), or global system for mobile communications (GSM). The wireless communication may include, for example, at least one of wireless fidelity (Wi-Fi), light fidelity (Li-Fi), Bluetooth™, Bluetooth™ low energy (BLE), Zigbee, near field communication (NFC), magnetic secure transmission, radio frequency (RF), and body area network (BAN). The wireless communication may include GNSS. The GNSS may include, for example, global positioning system (GPS), global navigation satellite system (GLONASS), Beidou navigation satellite system (Beidou), or Galileo (the European global satellite-based navigation system). Hereafter, the term GPS may be interchangeably used with the term GNSS. The wired communication, for example, may include at least one of universal serial bus (USB), high definition multimedia interface (HDMI), recommended standard 232 (RS-232), power line communications, and plain old telephone service (POTS). The network 162 may include a telecommunications network, for example, at least one of a computer network (e.g., LAN or WAN), the Internet, and a telephone network.

Each of the first and second external electronic devices 102 and 104 may be of the same type or of a different type from that of the electronic device 101. According to an embodiment of the present disclosure, all or part of operations executed in the electronic device 101 may be executed by another electronic device or a plurality of electronic devices (e.g., the electronic device 102 or 104, or the server 106). To perform a function or service automatically or by request, instead of performing the function or the service by the electronic device 101, the electronic device 101 may request at least part of a function relating thereto from the electronic device 102 or 104, or the server 106. The electronic device 102 or 104, or the server 106 may perform the requested function or an additional function and send its result to the electronic device 101. The electronic device 101 may provide the requested function or service by processing the received result. In doing so, for example, cloud computing, distributed computing, or client-server computing techniques may be used.

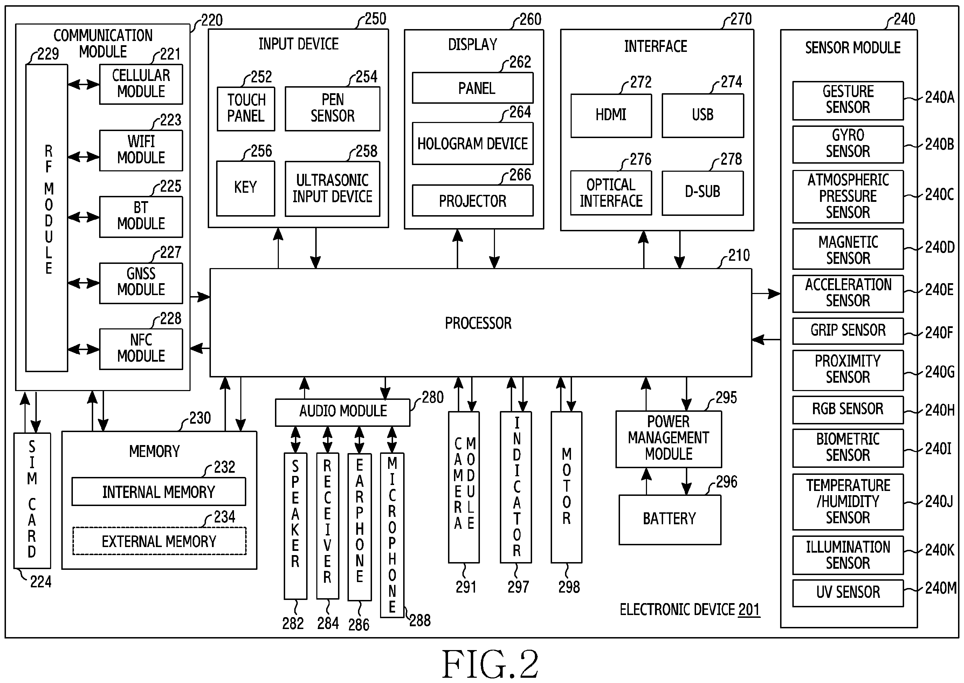

FIG. 2 is a block diagram of an electronic device, according to an embodiment of the present disclosure. The electronic device 201, for example, may include all or part of the above-described electronic device 101 of FIG. 1. The electronic device 201 includes one or more processors (e.g., an AP) 210, a communication module 220, a subscriber identification module (SIM) 224, a memory 230, a sensor module 240, an input device 250, a display 260, an interface 270, an audio module 280, a camera module 291, a power management module 295, a battery 296, an indicator 297, and a motor 298. The processor 210, for example, may control a plurality of hardware or software components connected to the processor 210, and also may perform various data processing and operations by executing an OS or an application program. The processor 210 may be implemented with a system on chip (SoC), for example. The processor 210 may further include a graphic processing unit (GPU) and/or an image signal processor. The processor 210 may include at least part (e.g., a cellular module 221) of the components illustrated in FIG. 2. The processor 210 may load commands or data received from at least one other component (e.g., a nonvolatile memory) into a volatile memory, process the commands, and store various data in the nonvolatile memory.

The communication module 220 may have the same or similar configuration as the communication interface 170 of FIG. 1. The communication module 220 may include, such as, the cellular module 221, a Wi-Fi module 223, a Bluetooth™ (BT) module 225, a GNSS module 227, an NFC module 228, and an RF module 229. The cellular module 221, for example, may provide voice call, video call, short message service (SMS), or Internet service through a communication network. The cellular module 221 may identify and authenticate the electronic device 201 in a communication network by using the SIM 224. The cellular module 221 may perform at least part of a function that the processor 210 provides. The cellular module 221 may further include a CP. At least some (e.g., two or more) of the cellular module 221, the Wi-Fi module 223, the BT module 225, the GNSS module 227, and the NFC module 228 may be included in one integrated circuit (IC) or an IC package. The RF module 229, for example, may transmit/receive a communication signal (e.g., an RF signal). The RF module 229, for example, may include a transceiver, a power amp module (PAM), a frequency filter, a low noise amplifier (LNA), or an antenna. At least one of the cellular module 221, the Wi-Fi module 223, the BT module 225, the GNSS module 227, and the NFC module 228 may transmit/receive an RF signal through an additional RF module. The SIM 224, for example, may include a card or an embedded SIM, and also may contain unique identification information (e.g., an integrated circuit card identifier (ICCID)) or subscriber information (e.g., an international mobile subscriber identity (IMSI)).

The memory 230 (e.g., the memory 130) may include at least one of an internal memory 232 or an external memory 234. The internal memory 232 may include at least one of, for example, a volatile memory (e.g., dynamic RAM (DRAM), static RAM (SRAM), or synchronous dynamic RAM (SDRAM)), and a non-volatile memory (e.g., one time programmable ROM (OTPROM), programmable ROM (PROM), erasable and programmable ROM (EPROM), electrically erasable and programmable ROM (EEPROM), mask ROM, flash ROM, flash memory, hard drive, and solid state drive (SSD)). The external memory 234 may include flash drive, for example, compact flash (CF), secure digital (SD), micro SD, mini SD, extreme digital (xD), multi-media card (MMC), or memory stick. The external memory 234 may be functionally or physically connected to the electronic device 201 through various interfaces.

The sensor module 240 may, for example, measure physical quantities or detect an operating state of the electronic device 201, and convert the measured or detected information into electrical signals. The sensor module 240 includes at least one of a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (e.g., a red, green, blue (RGB) sensor). The sensor module 240 may also include an E-nose sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 240 may further include a control circuit for controlling at least one sensor therein. The electronic device, as part of the processor 210 or individually, may further include a processor configured to control the sensor module 240 and control the sensor module 240 while the processor 210 is sleeping.

The input device 250, for example, may include at least one of a touch panel 252, a (digital) pen sensor 254, a key 256, and an ultrasonic input device 258. The touch panel 252 may use at least one of, for example, capacitive, resistive, infrared, and ultrasonic methods. Additionally, the touch panel 252 may further include a control circuit. The touch panel 252 may further include a tactile layer to provide a tactile response to a user. The (digital) pen sensor 254 may include, for example, part of a touch panel or a sheet for recognition. The key 256 may include, for example, a physical button, a touch key, an optical key, or a keypad. The ultrasonic input device 258 may detect ultrasonic waves from a microphone 288 and check data corresponding to the detected ultrasonic waves.

The display 260 (e.g., the display 160) may include at least one of a panel 262, a hologram device 264, a projector 266, and/or a control circuit for controlling them. The panel 262 may be flexible, transparent, or wearable, for example. The panel 262 and the touch panel 252 may be configured with one or more modules. The panel 262 may include a pressure sensor (or a force sensor) for measuring a pressure of the user touch. The pressure sensor may be integrated with the touch panel 252, or include one or more sensors separately from the touch panel 252. The hologram device 264 may show three-dimensional images in the air by using the interference of light. The projector 266 may display an image by projecting light on a screen. The screen, for example, may be placed inside or outside the electronic device 201. The interface 270, for example, may include an HDMI 272, a USB 274, an optical interface 276, or a D-subminiature (D-sub) 278. The interface 270 may be included in, for example, the communication interface 170 of FIG. 1. Additionally or alternately, the interface 270 may include a mobile high-definition link (MHL) interface, a SD card/MMC interface, or an infrared data association (IrDA) standard interface.

The audio module 280, for example, may convert sounds into electrical signals and convert electrical signals into sounds. At least some components of the audio module 280 may be included in, for example the input/output interface 150 of FIG. 1. The audio module 280 may process sound information input or output through a speaker 282, a receiver 284, an earphone 286, or the microphone 288. The camera module 291, as a device for capturing still images and videos, may include one or more image sensors (e.g., a front sensor or a rear sensor), a lens, an image signal processor (ISP), or a flash (e.g., an LED or a xenon lamp). The power management module 295, for example, may manage the power of the electronic device 201. According to an embodiment of the present disclosure, the power management module 295 may include a power management IC (PMIC), a charger IC, or a battery gauge, for example. The PMIC may have a wired and/or wireless charging method. The wireless charging method may include, for example, a magnetic resonance method, a magnetic induction method, or an electromagnetic method, and may further include an additional circuit for wireless charging, for example, a coil loop, a resonant circuit, or a rectifier circuit. The battery gauge may measure the remaining charge capacity of the battery 296, or a voltage, current, or temperature of the battery 296 during charging. The battery 296 may include, for example, a rechargeable battery and/or a solar battery.

The indicator 297 may display a specific state of the electronic device 201 or part thereof (e.g., the processor 210), for example, a booting state, a message state, or a charging state. The motor 298 may convert electrical signals into a mechanical vibration and generate a vibration or haptic effect. The electronic device 201 may include a mobile TV supporting device (e.g., a GPU) for processing media data according to standards such as digital multimedia broadcasting (DMB), digital video broadcasting (DVB), or MediaFlo™. Each of the above-described components of the electronic device may be configured with at least one component and the name of a corresponding component may vary according to the kind of electronic device. According to an embodiment of the present disclosure, the electronic device 201 may be configured to include at least one of the above-described components or an additional component, or to not include some of the above-described components. Additionally, some of components in an electronic device are configured as one entity, so that functions of previous corresponding components are performed identically.

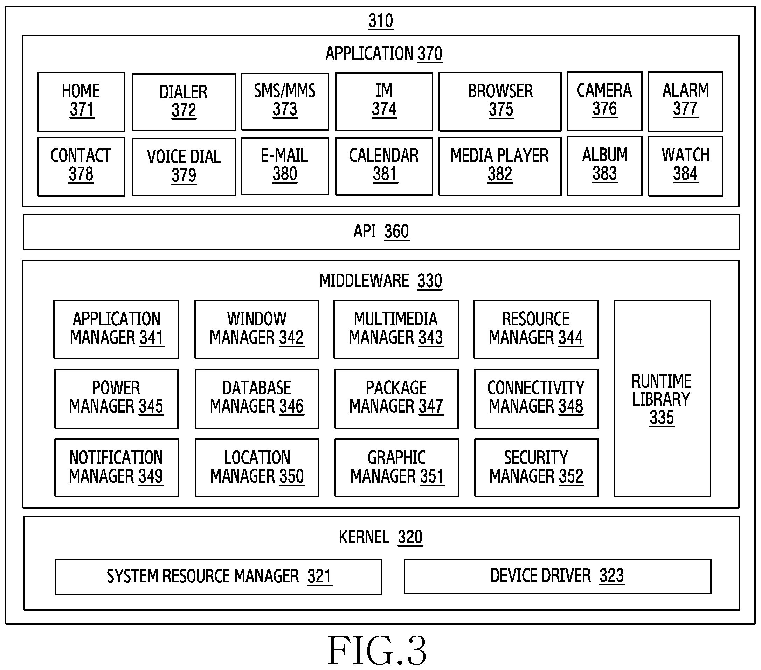

FIG. 3 is a block diagram of a program module, according to an embodiment of the present disclosure.

A program module 310 (e.g., the program 140) may include an OS for controlling a resource relating to the electronic device 101 and/or the applications 147 running on the OS. The OS may include, for example, Android™, iOS™, Windows™, Symbian™, Tizen™, or Bada™. Referring to FIG. 3, the program module 310 includes a kernel 320 (e.g., the kernel 141), a middleware 330 (e.g., the middleware 143), an API 360 (e.g., the API 145), and/or an application 370 (e.g., the applications 147). At least part of the program module 310 may be preloaded on an electronic device or may be downloaded from an external electronic device (e.g., the first external electronic device 102, the second external electronic device 104, or the server 106).

The kernel 320 includes, for example, at least one of a system resource manager 321 and/or a device driver 323. The system resource manager 321 may control, allocate, or retrieve a system resource. According to an embodiment of the present disclosure, the system resource manager 321 may include a process management unit, a memory management unit, or a file system management unit. The device driver 323 may include, for example, a display driver, a camera driver, a Bluetooth™ driver, a shared memory driver, a USB driver, a keypad driver, a Wi-Fi driver, an audio driver, or an inter-process communication (IPC) driver. The middleware 330, for example, may provide a function commonly required by the application 370, or may provide various functions to the application 370 through the API 360 in order to allow the application 370 to efficiently use a limited system resource inside the electronic device. The middleware 330 includes at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, and a security manager 352.

The runtime library 335 may include, for example, a library module used by a compiler to add a new function through a programming language while the application 370 is running. The runtime library 335 may manage input/output, manage memory, or arithmetic function processing. The application manager 341, for example, may manage the life cycle of the applications 370. The window manager 342 may manage a GUI resource used in a screen. The multimedia manager 343 may recognize a format for playing various media files and encode or decode a media file by using the codec in a corresponding format. The resource manager 344 may manage a source code of the application 3740 or a memory space. The power manager 345 may manage the capacity, temperature, and/or power of the battery, and determine or provide power information for an operation of the electronic device using corresponding information among the capacity, temperature, and/or power of the battery. The power manager 345 may operate together with a basic input/output system (BIOS). The database manager 346 may create, search, or modify a database used in the application 370. The package manager 347 may manage installation or updating of an application distributed in a package file format.

The connectivity manager 348 may manage, for example, a wireless connection. The notification manager 349 may provide an event, such as incoming messages, appointments, and proximity alerts, to the user. The location manager 350 may manage location information of an electronic device. The graphic manager 351 may manage a graphic effect to be provided to the user or a user interface relating thereto. The security manager 352 may provide, for example, system security or user authentication. The middleware 330 may include a telephony manager for managing a voice or video call function of the electronic device, or a middleware module for combining various functions of the above-described components. The middleware 330 may provide a module specialized for each type of OS. The middleware 330 may dynamically delete part of the existing components or add new components. The API 360, as a set of API programming functions, may be provided as another configuration according to the OS. For example, Android or iOS may provide one API set for each platform, and Tizen may provide two or more API sets for each platform.

The application 370 includes at least one of a home 371, a dialer 372, an SMS/multimedia messaging system (MMS) 373, an instant message (IM) 374, a browser 375, a camera 376, an alarm 377, a contact 378, a voice dial 379, an e-mail 380, a calendar 381, a media player 382, an album 383, a clock 384. Additionally, the application 370 may include health care (e.g., measure an exercise amount or blood sugar level), or environmental information (e.g., air pressure, humidity, or temperature information) application. The application 370 may include an information exchange application for supporting information exchange between the electronic device and an external electronic device. The information exchange application may include, for example, a notification relay application for relaying specific information to the external device or a device management application for managing the external electronic device. The notification relay application may relay notification information from another application of the electronic device to an external electronic device, or receive and forward notification information from an external electronic device to the user. The device management application, for example, may install, delete, or update a function (e.g., turn-on/turn off of the external electronic device itself (or some components) or display brightness (or resolution) adjustment) of an external electronic device communicating with the electronic device, or an application operating in the external electronic device. The application 370 may include a specific application (e.g., a health care application of a mobile medical device) according to a property of the external electronic device. The application 370 may include an application received from an external electronic device. At least part of the program module 310 may be implemented (e.g., executed) with software, firmware, hardware (e.g., the processor 210), or a combination of at least two of them, and include a module, a program, a routine, a set of instructions, or a process for executing one or more functions.

The term "module", as used herein, may refer, for example, to a unit including hardware, software, and firmware, or any suitable combination thereof. The term "module" can be interchangeably used with terms such as "unit", "logic", "logical block", "component", "circuit", and the like. A module can be a minimum unit of an integral component or can be a part thereof. A module can be a minimum unit for performing one or more functions or may be a part thereof. A module can be mechanically or electrically implemented. For example, a module, according to an embodiment of the present disclosure, can include, for example, and without limitation, at least one of a dedicated processor, a CPU, an Application-Specific Integrated Circuit (ASIC) chip, a Field-Programmable Gate Arrays (FPGAs), and a programmable-logic device, which are known or will be developed and which perform certain operations. At least some parts of a device (e.g., modules or functions thereof) or a method (e.g., operations), based on embodiments of the present disclosure, can be implemented with an instruction stored in a non-transitory computer-readable storage medium (e.g., the memory 130) as a program module. When the instruction is executed by a processor (e.g., the processor 120), the processor can perform a function corresponding to the instruction. The non-transitory computer readable recording medium can include, for example, a hard disk, a floppy disc, a magnetic medium (e.g., a magnetic tape), an optical storage medium (e.g., a Compact Disc-ROM (CD-ROM) or a DVD, a magnetic-optic medium (e.g., a floptical disc)), and an internal memory. The instruction can include code created by a compiler or code executable by an interpreter. The module or program module can further include at least one or more components among the aforementioned components, or can omit some of them, or can further include additional other components. Operations performed by a module, program module, or other components of the various embodiments of the present disclosure can be executed in a sequential, parallel, repetitive, or heuristic manner. In addition, some of the operations can be executed in a different order or may be omitted, or other operations may be added.

FIG. 4 is a flowchart of a process for displaying notification information content near an icon according to a first user input while a badge is displayed in an electronic device according to an exemplary embodiment of the present disclosure.

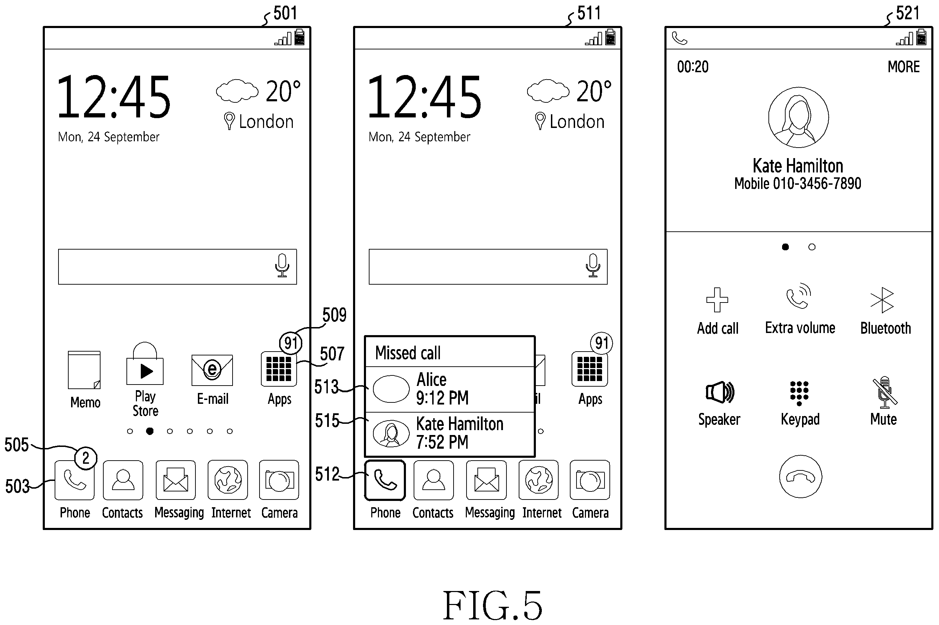

FIGS. 5 through 9 illustrate a state where icons and notification information indicators are displayed on a screen and an example where notification information content is displayed on the screen according to a user input in an electronic device according to an exemplary embodiment of the present disclosure.

Referring to FIG. 4, the electronic device receives a first user input in a region displaying a notification information indicator of a screen in operation 401. The indicator is a UI element indicating presence or absence of the notification information and the number of notification information, and may be displayed near an icon. The indicator may be provided as various visual feedbacks. For example, the indicator may be displayed in the form of a badge shape, and may be changed in color and size according to the notification information. The indicator may reflect the number of the notification information, and a number corresponding to the number of the notification information may be displayed inside the indicator. In the following explanations, it is assumed that the indicator is, but not limited to, the badge for the sake of convenience.

Referring to FIG. 5, the electronic device may display a plurality of icons on a screen 501. The icon may correspond to an application or correspond to a folder. For example, an icon 503 corresponds to a call application, and the call application may be executed if the icon 503 is touched. An icon 507 corresponds to a folder and the folder may include at least one icon. An image of the icon 507 may be generated by reflecting a plurality of icon images included in the folder. In the following explanations, the icon corresponding to the application is referred to as an app icon, and the icon corresponding to the folder may be referred to as a folder icon for the sake of convenience. For example, the icon 503 is the app icon, and the icon 507 is the folder icon.

A badge may be displayed near the icon. The badge may be an indicator indicating notification information occurring in an application relating to the icon. For example, a badge 505 displayed near the icon 503 may indicate presence of notification information in the application corresponding to the icon. Also, the badge 505 may indicate the number of notification information. A number displayed in the badge 505 matches the number of notification information. For example, the number '2' displayed in the badge 505 may indicate two notification information in the application. A badge 509 may indicate presence of notification information in at least one application included in the folder. The number '91' displayed in the badge 509 may indicate 91 notification information in the application included in the folder.

If receiving a first user input, the electronic device may display at least part of content of the notification information or a list of the notification information on the screen based on the number of the notification information.

In operation 403, the electronic device determines whether the number of the notification information is less than or greater than a set value. If the notification information is less than the set value, the electronic device may display at least part of the content of the notification information near the icon in operation 405. For example, if receiving the first user input at the badge 505 displayed near the icon 503, the electronic device may determine two notification information and display at least part of content of the notification information 513 and 515 near an icon 512. According to an embodiment, the electronic device may display at least part of the content of the notification information 513 and 515, and dim some region (e.g., a region not displaying the icon 512 and the content of the notification information 513 and 515) of a screen 511. The user may recognize an existence of the notification information at the application regarding the icon from the badge and recognize the number of the notification information from the number included in the badge. The electronic device detects the first user input in at least part of a badge region (a region displaying the badge on the display). The first user input may be a touch input. The first user input may be a force touch input. The force touch touches by applying pressure on the display. If the user force touches the badge region, the electronic device may detect the force touch and display at least part of the content of the notification information 513 and 515 near the icon 512 based on the force touch.

According to an embodiment, the electronic device may execute a function corresponding to the icon if the first user input is the touch, and display information regarding the notification information near the icon on the screen if the first user input is the force touch. Herein, the information regarding the notification information may include at least one information of first information, second information, and third information. Also, the information regarding the notification information may include a button or a short cut for executing the function regarding the notification information. The button and the short cut are an example of the UI element.

For example, if the icon is the phone icon 503, a call function may be executed if the user touches the badge region of the phone icon 503, and a list (missed call list) regarding missed calls may be displayed near the call icon 512 if the user force touches the badge region of the phone icon 503. In so doing, the electronic device may remove the badge with the call icon 512 of the screen 511 when the missed call list is displayed. According to another embodiment, the first user input may be a long press touch. The long press touch keeps touching over a specific time. The electronic device may detect the long press touch in the badge region, and display at least part of the content of the notification information 513 and 515 near the call icon 512 that the badge is removed based on the long press touch.

For example, if the user force touches (or long press touches) the badge 505 displayed near the phone icon 503, the missed call list 513 and 515 may be displayed near the icon 512 that the badge is removed. The missed call list 513 and 515 may display caller information and the reception time.

The electronic device may receive a second user input for selecting one of the notification information in operation 407, and execute a function regarding the selected notification information, in operation 409, according to the second user input.

For example, if receiving g a user input (the first user input) which force touches the badge region, the electronic device may display the missed call list 513 and 515 near the icon 512 displayed on the screen 511. The missed call list 513 and 515 may include a caller name and the reception time. In this state, if the user selects (the second user input) a particular call list 515, the electronic device may display a screen 521 for making a call to the caller.

The user may quickly obtain the notification information content through the content of the notification information displayed near the icon without switching the screen. Also, the user may execute the function regarding the notification information quickly and easily.

Meanwhile, if the number of the notification information exceeds the set value, the electronic device may display a list of the notification information on the screen in operation 411. For example, if the number of the notification information exceeds 10, the electronic device may display the notification information list on the screen.

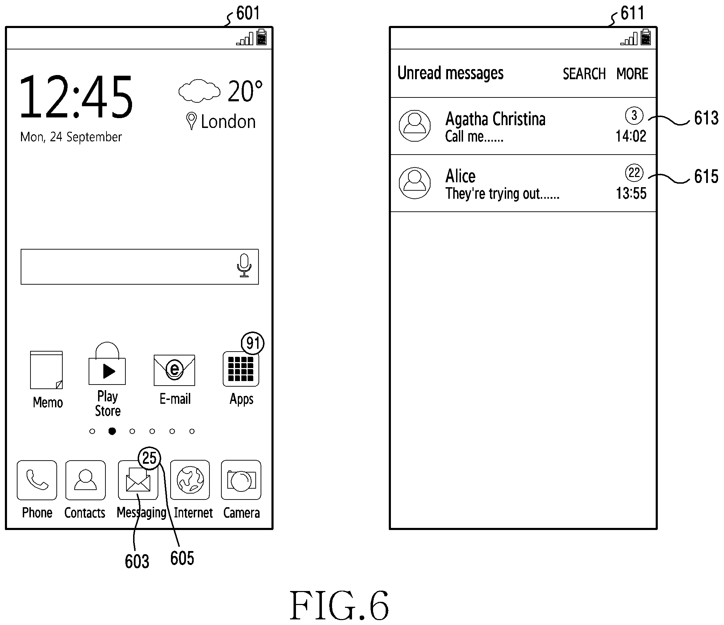

Referring to FIG. 6, an icon 603 and a badge 605 are displayed on a screen 601. The number '25' included in the badge 605 may indicate 25 notification information. If the notification information is 25, all of the notification information may not be displayed near the icon 603 and accordingly the electronic device may display a notification information list on a screen 611.

For example, the badge 605 displayed near the message icon 603 is notification information indicating 25 unread messages. If the user force touches the badge 605, an unread message list 613 and 615 may be displayed on the screen 611.

The message list 613 and 615 may display a message sender name and the number of the unread messages. For example, the message list 613 indicates that the sender is 'Agatha Christina' and three messages are unread. The message list 615 indicates that the sender is 'Alice' and 22 messages are unread.

According to an embodiment, even if the number of the notification information exceeds the set value (e.g., 10), the electronic device may display the notification information near the icon as shown in the screen 511 of FIG. 5, without switching to the notification information list screen 611. In this case, the user may obtain the notification information by scrolling.

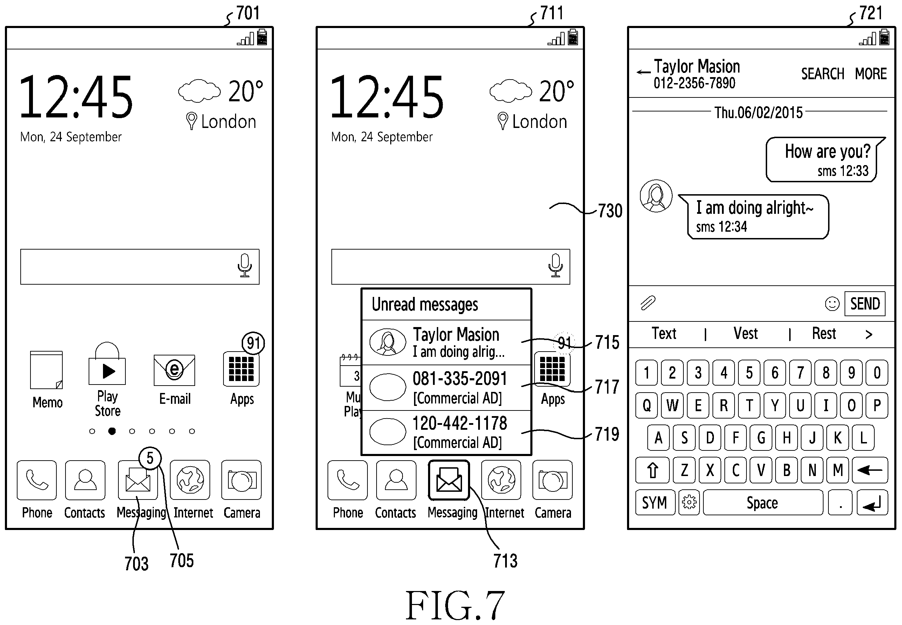

Referring to FIG. 7, an icon 703 and a badge 705 are displayed in a screen 701. The icon corresponds to a message application. The badge 705 indicates five notification information. If the user force touches the badge region 705, the electronic device determines the number of the notification information. Since the number of the notification information is smaller than a set value (e.g., 10), the electronic device may display notification information 715, 717, and 719 near a message icon 713 displayed in a screen 711. The notification information 715, 717, and 719 may be at least part of, for example, content of unread messages. The notification information 715, 717, and 719 may include a photo, a name, a phone number of a person who sends the message, and part of the content of the message.

In this state, if the user touches and selects one of the notification information 715, 717, and 719, the electronic device may execute a function regarding the selected notification information and display on the screen. For example, if the user touches and selects the message notification information 715 of Taylor Masion, a dialogue window with Taylor Masion may be displayed as shown in a screen 721.

Also, if receiving a user input in a second region 730 (e.g., a region not displaying the notification information 715, 717, and 719 on the screen) of the screen while the notification information 715, 717, and 719 is displayed on the screen, the electronic device may remove the notification information 715, 717, and 719 based on the user input and return to the previous screen 701. As returning to the previous screen 701, the electronic device may remove the badge of the icon.

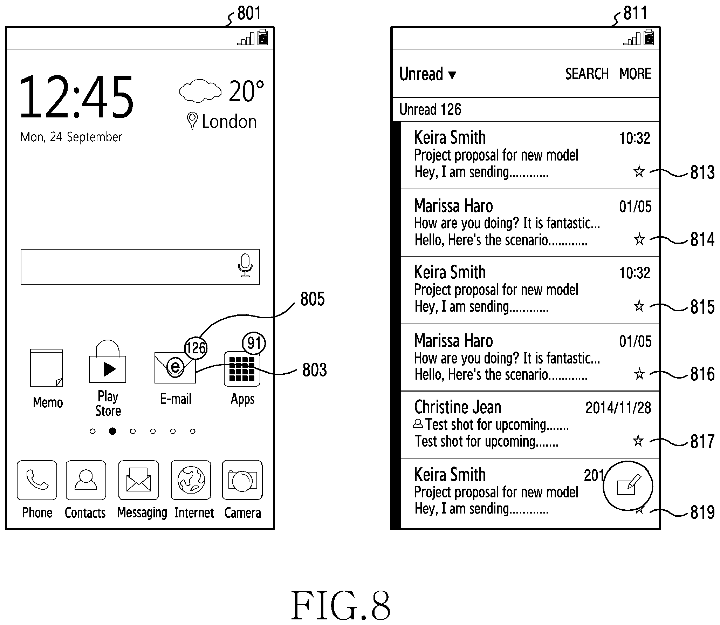

Referring to FIG. 8, an icon 803 and a badge 805 are displayed in a screen 801. The icon corresponds to an email application. The badge 805 indicates 126 notification information. If the user force touches the badge region 805, the electronic device determines the number of the notification information. Since the number of the notification information is greater than a set value (e.g., 10), the electronic device may display a notification information list in a screen 811.

The notification information list may include a plurality of notification information 813, 814, 815, 816, 817, and 819. Each notification information may include a name of a person who sends the email, a reception time, an email title, and part of email content.

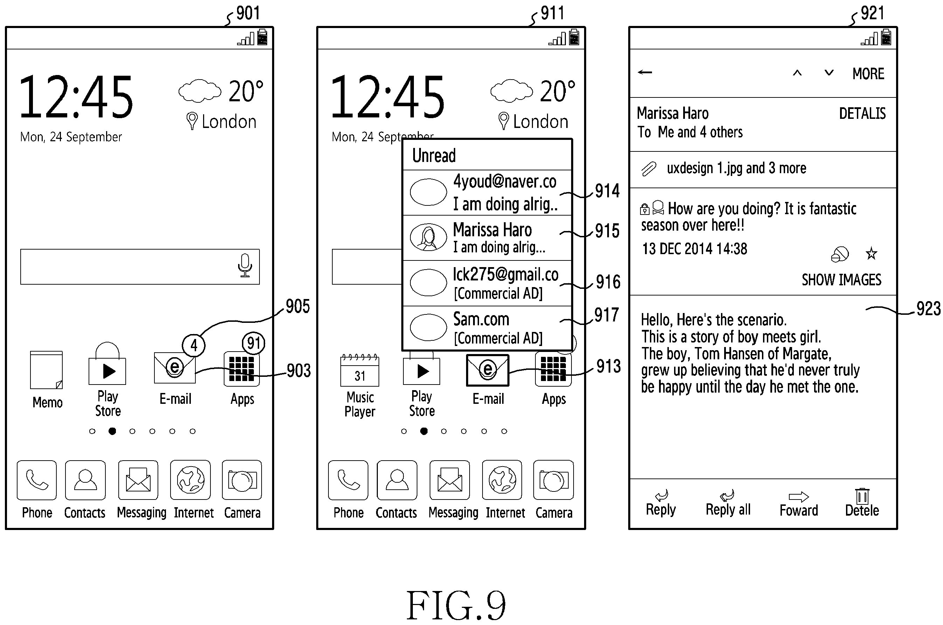

Referring to FIG. 9, an icon 903 and a badge 905 are displayed in a screen 901. The icon corresponds to an email application. The badge 905 indicates 4 notification information. If the user force touches the badge region 905, the electronic device determines the number of the notification information. Since the number of the notification information is smaller than the set value (e.g., 10), the electronic device may display notification information 914, 915, 916, and 917 near an email icon 913 as shown in a screen 911. Each notification information may include a photo, a name, an email address of a sender, and part of content body. If the user touches and selects one notification information 915 of the notification information 914, 915, 916, and 917, the electronic device may execute a function corresponding to the selected notification information 915. For example, the electronic device may display content 923 of the email corresponding to the selected notification information 915 as shown in FIG. 921.

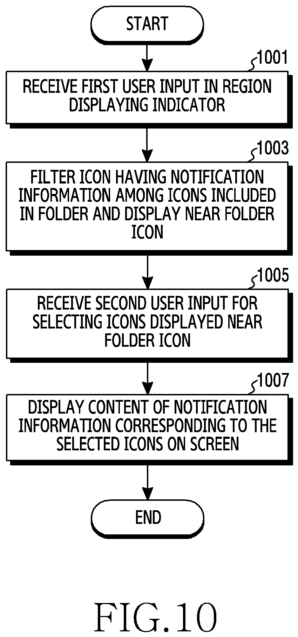

FIG. 10 is a flowchart of a process for displaying an icon and a badge of an app having notification near an icon according to a first user input while a badge is displayed at a folder icon in an electronic device according to an embodiment of the present disclosure.

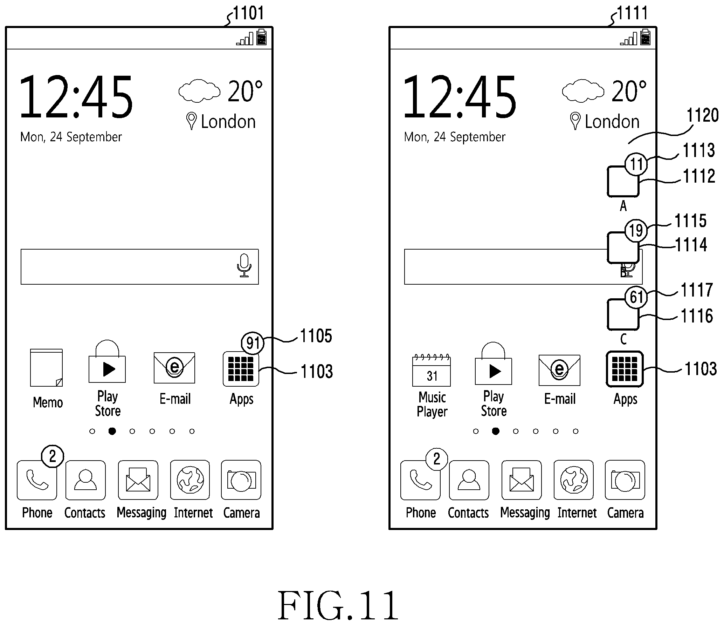

FIG. 11 illustrates an example where an icon and a badge of an app having notification are displayed near an icon according to a first user input while a badge is displayed at a folder icon in an electronic device according to an exemplary embodiment of the present disclosure.

Referring to FIG. 10, the electronic device receives a first user input in a region displaying a badge in operation 1001.

Referring to FIG. 11, a screen 1101 displays an icon 1103 and a notification information badge 1105. The icon 1103 corresponds to a folder, and the folder includes an icon corresponding to at least one app. The notification information badge 1105 displayed near the icon 1103 indicates presence of notification information at the app included in the folder. The number displayed in the badge 1105 may be the same as the total number of notification information occurring at the app included in the folder. That is, the badge 1105 displayed near the folder icon 1103 may indicate the total number of the notification information occurring at the app included in the folder. For example, the number '91' displayed in the badge 1105 may indicate presence of 91 notification information regarding at least one app included in the folder 1103.

Referring to FIG. 10, if the user inputs a force touch in the badge region 1105, the electronic device may, in operation 1003, filter an icon having the notification information among icons included in the folder based on the inputted force touch and display near the folder icon 1103. For example, the electronic device may, as shown in a screen 1111 of FIG. 11, display icons 1112, 1114, and 1116 having the notification information among the icons included in the folder icon 1103 and badges 1113, 115, and 1117 near the folder icon 1103.

The electronic device receives a second user input which selects the icons 1112, 1114, and 1116 displayed near the folder icon 1103 in operation 1005, and display content of notification information corresponding to the selected icon on the screen based on the received second user input in operation 1007.

Also, if receiving a user input in a second region 1120 (e.g., a region not displaying the folder icon 1103 and the icons 1112, 1114, and 1116 of the screen) of the screen while the icons 1112, 1114, and 1116 are displayed near the folder icon 1103, the electronic device may return to the previous screen 1101 and display the screen.

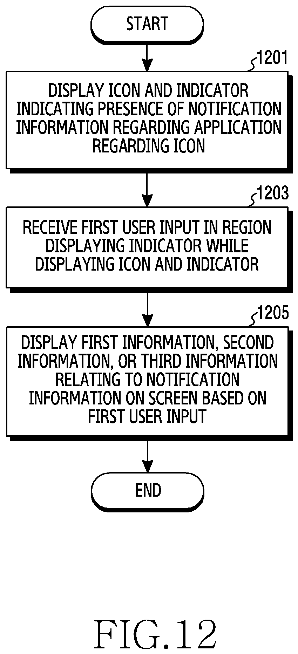

FIG. 12 is a flowchart of a process for displaying first information, second information, or third information according to a first user input while icons and indicators are displayed on a screen in an electronic device according to another embodiment of the present disclosure.

Referring to FIG. 12, the electronic device displays an icon and an indicator which indicates presence of notification information about an application regarding the icon in operation 1201. The icon corresponds to a folder.

The folder includes at least one application, and at least one application included in the folder has a corresponding icon. In the following explanations, the icon corresponding to the application is referred to as an 'app icon', the icon corresponding to the folder may be referred to as a 'folder icon', and the icon corresponding to the application included in the folder is referred to as a 'folder app icon'.

If notification information occurs at the application included in the folder, the electronic device displays an indicator near the folder icon. The indicator may include information regarding the number of notification information. For example, the indicator may include a number, and the number is equal to the number of the notification information occurring at the application.

The electronic device receives a first user input in a region displaying the indicator while displaying the icon and the indicator in operation 1203. The first user input may, but not limited to, touch, long press touch, or force touch the indicator displayed near the app icon or the folder icon.

The electronic device may display first information, second information, or third information relating to the notification information on the screen based on the first user input in operation 1205. The electronic device may display the first information or the second information based on the number of the notification information. The electronic device may display the first information if the number of the notification information is below the set value, and display the second information if the number of the notification information is greater than the set value.

The first information may include at least part of content of the notification information. The first information may be displayed near the icon. For example, for a missed call, notification information occurs at the call application and the electronic device may display an indicator (e.g., a badge) near the call icon. If the user touches a region displaying the indicator, the electronic device may display at least one notification information regarding the missed call near the call icon. Each notification information may include a name, a photo, and a phone number of a person who makes the call. Also, the electronic device may receive a second user input which selects one of the notification information, and execute a function of an application regarding the selected notification information, that is, an application that the notification is occurred, based on the second user input.

The second information may be a list of the notification information. If the number of the notification information is greater than the set value, it is difficult to display the notification information near the icon with respect to all the notification information, and accordingly the electronic device may display the list of the notification information by switching the screen. For example, if missed calls exceed the set value, the electronic device may switch the screen and display the missed call list as a whole screen.

If the icon is a folder icon corresponding to the folder, the electronic device may display the third information on the screen. The third information may be displayed near the folder icon. The third information may include an icon corresponding to the application, that the notification is occurred, among applications included in the folder and an indicator relating to the icon. That is, the third information may be obtained by filtering the icon, that the notification is occurred, among the folder app icons and the indicator regarding the icon.

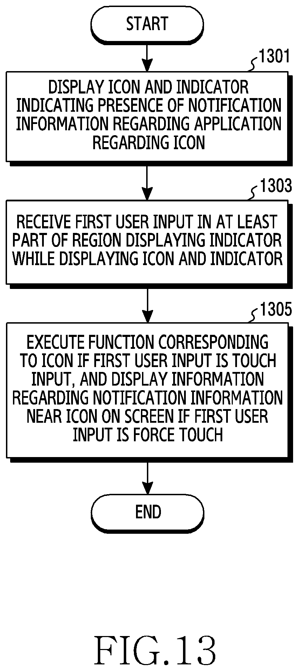

FIG. 13 is a flowchart of a process for displaying information regarding notification information near an icon on a screen according to a first user input while an icon and an indicator are displayed on the screen in an electronic device according to another embodiment of the present disclosure.

Referring to FIG. 13, the electronic device may display an icon and an indicator which indicates presence of notification information about an application regarding the icon in operation 1301.

The icon may correspond to an application or correspond to a folder.

The folder may include at least one application, and at least one application included in the folder may have a corresponding icon. If notification information occurs at the application, the electronic device may display an indicator indicating presence of the notification information near the app icon. The indicator may be, for example, a badge. Alternatively, if notification information occurs at the application included in the folder, the electronic device may display an indicator near the folder icon. The indicator may include information regarding the number of notification information. For example, the indicator may include a number, and the number is equal to the number of the notification information occurring at the application.

The electronic receives a first user input in at least part of a region displaying the indicator while displaying the icon and the indicator in operation 1303. In operation 1305, the electronic device may determine whether the first user input is a touch input or a force touch input, execute a function corresponding to the icon if the first user input is the touch input, and display information regarding the notification information near the icon on the screen if the first user input is the force touch. Herein, the information regarding the notification information may include at least one information of first information, second information, or third information.

The first information may include at least part of content of the notification information. The first information may be displayed near the icon. For example, for a missed call, notification information occurs at the call application and the electronic device may display an indicator near the call icon. If the user touches a region displaying the indicator, the electronic device may display at least one notification information regarding the missed call near the call icon. Each notification information may include a name, a photo, and a phone number of a person who makes the call.

The second information may be a list of the notification information. If the number of the notification information is greater than the set value, it is difficult to display the notification information near the icon with respect to all the notification information, and accordingly the electronic device may display the list of the notification information by switching the screen.

If the icon is a folder icon corresponding to the folder, the electronic device may display the third information on the screen. The third information may be displayed near the folder icon. The third information may include an icon corresponding to the application, that the notification is occurred, among applications included in the folder and an indicator relating to the icon. That is, the third information may be obtained by filtering the icon having the notification of the folder app icon and the indicator regarding the icon.

Also, the information regarding the notification information may include a button or a short cut for executing a function relating to the notification information. The button and the short cut are an example of the UI element.

According to various embodiments, at least some of the devices (e.g., modules or functions thereof) or the method (e.g., operations) according to the present disclosure may be implemented by a command stored in a computer-readable storage medium in a programming module form. When the command is executed by processor, the one or more processors may execute a function corresponding to the command. The computer readable recording medium, for example, may be a memory.

The computer readable recording medium may include hard disc, a floppy disc, magnetic media (e.g., a magnetic tape), optical media (e.g., a compact disc read only memory (CD-ROM), a digital versatile disc (DVD), magneto-optical media (e.g., a floptical disk)), hardware devices (e.g., a read only memory (ROM), a random access memory (RAM), and a flash memory), and etc. In addition, the program instructions may include high class language codes, which can be executed in a computer by using an interpreter, as well as machine codes made by a compiler. Any of the hardware devices as described above may be configured to work as one or more software modules in order to perform the operations according to various embodiments of the present disclosure, and vice versa.

Any of the modules or programming modules according to various embodiments of the present disclosure may include at least one of the above described elements, exclude some of the elements, or further include other additional elements. The operations performed by the modules, programming module, or other elements according to various embodiments of the present disclosure may be executed in a sequential, parallel, repetitive, or heuristic manner. Further, some operations may be executed according to another order or may be omitted, or other operations may be added.

The various embodiments of the present disclosure disclosed in the present specification and the drawings have been presented to help comprehension of the present disclosure, and are not intended to limit the scope of various embodiments of the present disclosure.

## Claims

1. An electronic device (101) comprising:
a display (160) for displaying a first icon (1103) corresponding to a folder and a first indicator (1105) which indicates presence of notification information regarding a plurality of applications corresponding to the first icon; and
a processor (120) electrically connected to the display (160),
wherein the processor (120) is configured to:
receive (1001) a first user input in at least part of a region which displays the first indicator, while the first icon and the first indicator are displayed;
execute a function corresponding to the first icon if the first user input is a touch input;
control the display (160) to display (1003) information regarding the notification information on a screen if the first user input is a designated touch input being different from the touch input, wherein the information regarding the notification information comprises at least one second icon (1112, 1114, 1116) corresponding to at least one application corresponding to at least part of the notification information among the plurality of applications included in the folder and at least one second indicator (1113, 1115, 1117) which indicates presence of notification information regarding the at least one second icon;
receive (1005) a second user input selecting one of the at least one second icon; and
display (1007) content of at least part of the notification information corresponding to the selected second icon on the screen.

2. The electronic device (101) of claim 1, wherein the content comprises a button or a short cut for executing the function regarding the at least part of the notification information.

3. The electronic device (101) of claim 1, wherein the first indicator (1105) comprises information regarding the number of the notification information.

4. A notification information display method of an electronic device (101), the method comprising:
displaying a first icon (1103) corresponding to a folder and a first indicator (1105) which indicates presence of notification information regarding a plurality of applications corresponding to the first icon;
receiving (1001) a first user input in at least part of a region which displays the first indicator, while the first icon (1103) and the first indicator (1105) are displayed;
executing a function corresponding to the first icon if the first user input is a touch input;
displaying (1003) information regarding the notification information if the first user input is a designated touch input being different from the touch input, wherein the information regarding the notification information comprises at least one second icon corresponding to at least one application corresponding to at least part of the notification information among the plurality of applications included in the folder and at least one second indicator which indicates presence of notification information regarding the at least one second icon;
receiving (1005) a second user input selecting one of the at least one second icon; and
displaying (1007) content of at least part of the notification information corresponding to the selected second icon on the screen.

## Patentansprüche

1. Elektronische Vorrichtung (101), umfassend:
eine Anzeige (160) zum Anzeigen eines ersten Symbols (1103), das einem Ordner entspricht, und eines ersten Indikators (1105), der das Vorhandensein von Benachrichtigungsinformationen bezüglich einer Vielzahl von Anwendungen angibt, die dem ersten Symbol entsprechen; und
einen Prozessor (120), der elektrisch mit der Anzeige (160) verbunden ist, wobei der Prozessor (120) für Folgendes konfiguriert ist:
Empfangen (1001) einer ersten Benutzereingabe in zumindest einem Teil einer Region, die den ersten Indikator anzeigt, während das erste Symbol und der erste Indikator angezeigt werden;
Ausführen einer Funktion, die dem ersten Symbol entspricht, wenn die erste Benutzereingabe eine Berührungseingabe ist;
Steuern der Anzeige (160), um Informationen bezüglich der Benachrichtigungsinformationen auf einem Bildschirm anzuzeigen (1003), wenn die erste Benutzereingabe eine bestimmte Berührungseingabe ist, die sich von der Berührungseingabe unterscheidet, wobei die Informationen bezüglich der Benachrichtigungsinformationen zumindest ein zweites Symbol (1112, 1114, 1116), das zumindest einer Anwendung entspricht, die zumindest einem Teil der Benachrichtigungsinformationen aus der Vielzahl von Anwendungen entspricht, die in dem Ordner enthalten sind, und zumindest einen zweiten Indikator (1113, 1115, 1117) umfassen, der das Vorhandensein von Benachrichtigungsinformationen bezüglich des zumindest einen zweiten Symbols angibt;
Empfangen (1005) einer zweiten Benutzereingabe, die eines von dem zumindest einen zweiten Symbol auswählt; und
Anzeigen (1007) von Inhalt von zumindest einem Teil der Benachrichtigungsinformationen, die dem ausgewählten zweiten Symbol auf dem Bildschirm entsprechen.

2. Elektronische Vorrichtung (101) nach Anspruch 1, wobei der Inhalt eine Schaltfläche oder eine Verknüpfung zum Ausführen der Funktion bezüglich des zumindest einen Teils der Benachrichtigungsinformationen umfasst.

3. Elektronische Vorrichtung (101) nach Anspruch 1, wobei der erste Indikator (1105) Informationen bezüglich der Anzahl der Benachrichtigungsinformationen umfasst.

4. Anzeigeverfahren für Benachrichtigungsinformationen einer elektronischen Vorrichtung (101), wobei das Verfahren Folgendes umfasst:
Anzeigen eines ersten Symbols (1103), das einem Ordner entspricht, und eines ersten Indikators (1105), der das Vorhandensein von Benachrichtigungsinformationen bezüglich einer Vielzahl von Anwendungen angibt, die dem ersten Symbol entsprechen;
Empfangen (1001) einer ersten Benutzereingabe in zumindest einem Teil einer Region, die den ersten Indikator anzeigt, während das erste Symbol (1103) und der erste Indikator (1105) angezeigt werden;
Ausführen einer Funktion, die dem ersten Symbol entspricht, wenn die erste Benutzereingabe eine Berührungseingabe ist;
Anzeigen (1003) von Informationen bezüglich der Benachrichtigungsinformationen, wenn die erste Benutzereingabe eine bestimmte Berührungseingabe ist, die sich von der Berührungseingabe unterscheidet, wobei die Informationen bezüglich der Benachrichtigungsinformationen zumindest ein zweites Symbol, das zumindest einer Anwendung entspricht, die zumindest einem Teil der Benachrichtigungsinformationen aus der Vielzahl von Anwendungen entspricht, die in dem Ordner enthalten sind, und zumindest einen zweiten Indikator umfassen, der das Vorhandensein von Benachrichtigungsinformationen bezüglich des zumindest einen zweiten Symbols angibt;
Empfangen (1005) einer zweiten Benutzereingabe, die eines von dem zumindest einen zweiten Symbol auswählt; und
Anzeigen (1007) von Inhalt von zumindest einem Teil der Benachrichtigungsinformationen, die dem ausgewählten zweiten Symbol auf dem Bildschirm entsprechen.

## Revendications

1. Dispositif électronique (101) comprenant :
un dispositif d'affichage (160) destiné à afficher une première icône (1103) correspondant à un dossier et un premier indicateur (1105) qui indique la présence d'informations de notification concernant une pluralité d'applications correspondant à la première icône ; et
un processeur (120) raccordé électriquement au dispositif d'affichage (160), ledit processeur (120) étant configuré pour :
recevoir (1001) une première entrée utilisateur dans au moins une partie d'une zone qui affiche le premier indicateur, pendant que la première icône et le premier indicateur sont affichés ;
exécuter une fonction correspondant à la première icône si la première entrée utilisateur est une entrée
tactile ;
commander le dispositif d'affichage (160) pour afficher (1003) des informations concernant les informations de notification sur un écran si la première entrée utilisateur est une entrée tactile désignée différente de l'entrée tactile, lesdites informations concernant les informations de notification comprenant au moins une seconde icône (1112, 1114, 1116) correspondant à au moins une application correspondant à au moins une partie des informations de notification parmi la pluralité
d'applications comprises dans le dossier et au moins un second indicateur (1113, 1115, 1117) qui indique la présence d'informations de notification concernant la au moins une seconde icône ;
recevoir (1005) une seconde entrée utilisateur choisissant l'une des au moins une seconde icône ; et afficher (1007) le contenu d'au moins une partie des informations de notification correspondant à la seconde icône choisie sur l'écran.

2. Dispositif électronique (101) selon la revendication 1, ledit contenu comprenant un bouton ou un raccourci pour exécuter la fonction concernant la au moins une partie des informations de notification.

3. Dispositif électronique (101) selon la revendication 1, ledit premier indicateur (1105) comprenant des informations concernant le nombre des informations de notification.

4. Procédé d'affichage d'informations de notification d'un dispositif électronique (101), le procédé comprenant :
l'affichage d'une première icône (1103) correspondant à un dossier et d'un premier indicateur (1105) qui indique la présence d'informations de notification concernant une pluralité d'applications correspondant à la première icône ;
la réception (1001) d'une première entrée utilisateur dans au moins une partie d'une zone qui affiche le premier indicateur, pendant que la première icône (1103) et le premier indicateur (1105) sont affichés ;
l'exécution d'une fonction correspondant à la première icône si la première entrée utilisateur est une entrée tactile ;
l'affichage (1003) des informations concernant les informations de notification si la première entrée utilisateur est une entrée tactile désignée différente de l'entrée tactile, lesdites informations concernant les informations de notification comprenant au moins une seconde icône correspondant à au moins une application correspondant à au moins une partie des informations de notification parmi la pluralité d'applications comprises dans le dossier et au moins un second indicateur qui indique la présence d'informations de notification
concernant la au moins une seconde icône ;
la réception (1005) d'une seconde entrée utilisateur choisissant l'une de la au moins une seconde icône ; et l'affichage (1007) du contenu d'au moins une partie des informations de notification correspondant à la seconde icône choisie sur l'écran.
